# EUROPÄISCHE PATENTSCHRIFT

(11) **EP 2 716 435 B1**
(45) Veröffentlichungstag und Bekanntmachung des Hinweises auf die Patenterteilung: **23.08.2017**
(21) Anmeldenummer: 12186973.9
(22) Anmeldetag: 02.10.2012
(51) Int. Cl.: B29C 70/46, B29K 21/00, B29K 101/12

(54) **Verfahren zur Herstellung eines Verbundformteils, insbesondere eines Faserverbundformteils und Verbundformteil, insbesondere Faserverbundformteil**
Method for producing a composite moulded part, in particular a fibre compound moulded part and composite moulded part, in particular fibre compound moulded part
Procédé destiné à la fabrication d'une pièce de formage composite, notamment d'une pièce de formage composite en fibre et pièce de formage composite, notamment pièce de formage composite en fibre

(43) Veröffentlichungstag der Anmeldung: 09.04.2014
(73) Patentinhaber: Reifenhäuser GmbH & Co. KG Maschinenfabrik, 53844 Troisdorf (DE)
(72) Erfinder: Cinquemani, Claudio, 51063 Köln (DE); Nitschke, Michael, 53115 Bonn (DE); Quick, Nicolas, 59955 Winterberg (DE); Tobay, Armin, 53881 Euskirchen (DE)
(74) Vertreter: Rohmann, Michael

(56) Entgegenhaltungen:
- EP-A1- 0 420 772
- EP-A1- 1 714 772
- EP-A1- 1 923 192
- WO-A1-92/02357
- LEE MCKAGUE ED - MIRACLE & S L DONALDSON D B: "Thermoplastic resins", 1. Dezember 2001 (2001-12-01), ASM HANDBOOK / PREPARED UNDER THE DIRECTION OF THE ASM INTERNATIONAL HANDBOOK COMMITTEE, ASM INTERNATIONAL, MATERIALS PARK, OHIO ,USA, PAGE(S) 132 - 140, XP002677833, ISBN: 978-0-87170-703-1 * Seite 135 *

## Beschreibung

Die Erfindung betrifft ein Verfahren zur Herstellung eines Verbundformteils, insbesondere eines Faserverbundformteils, bei dem Verstärkungsmaterial in einer Matrix aus thermoplastischem Kunststoff eingebettet ist, wobei zumindest eine Lage aus höherschmelzendem Verstärkungsmaterial mit zumindest einer Lage aus niedrigerschmelzenden Fasern aus thermoplastischem Kunststoff zu einem Laminat kombiniert wird und wobei das Laminat mit Wärme und/oder Druck beaufschlagt wird, so dass die niedrigerschmelzenden Fasern schmelzen und das Verstärkungsmaterial von der Schmelze imprägniert wird, wobei die zumindest eine Lage aus niedrigerschmelzenden Fasern ein Vliesstoff ist, wobei als Vliesstoff ein Meltblown-Vlies eingesetzt wird. - Die Erfindung betrifft vor allem die Herstellung von Verbundformteilen bzw. Faserverbundformteilen in Leichtbauweise. Der Begriff Faserverbundformteil meint, dass in dem Verbundformteil Fasern bzw. nicht aufgeschmolzene Fasern vorliegen. Die erfindungsgemäß hergestellten Verbundformteile bzw. Faserverbundformteile können einerseits eine zweidimensionale Form, insbesondere die Form einer Platte oder dergleichen aufweisen. Vorzugsweise haben die erfindungsgemäß hergestellten Verbundformteile bzw. Faserverbundformteile eine dreidimensionale Form.

Verfahren, der eingangs genannten Art sind aus der Praxis bereits in verschiedenen Ausführungsformen bekannt. Bei den bekannten Verfahren werden zunächst Halbzeuge hergestellt, die aus einer Matrix aus thermoplastischem Kunststoff und darin eingebetteten Verstärkungsfasern bestehen. Dazu werden die Verstärkungsfasern - beispielsweise Glasfasern - zunächst mit Folien, Pulver oder Schmelze aus thermoplastischem Kunststoff kombiniert. Durch Beaufschlagung mit Wärme und Druck wird der thermoplastische Kunststoff aufgeschmolzen und auf diese Weise werden die Verstärkungsfasern mit der Schmelze imprägniert, sodass letztendlich das Halbzeug aus der thermoplastischen Matrix mit den eingebetteten Verstärkungsfasern resultiert. Diese Halbzeuge nennt man auch Organobleche und sie werden in der Regel in Form von Platten hergestellt. Diese Platten müssen zur Herstellung eines Faserverbundformteils mit dreidimensionaler Form in einem späteren zusätzlichen Verarbeitungsschritt erneut erwärmt werden, bevor sie zu dem gewünschten Faserverbundformteil geformt werden können. Die bekannten Verfahren und Halbzeuge weisen eine Reihe von Nachteilen auf. Zunächst lässt bei der Herstellung der Halbzeuge - insbesondere bei der Verwendung von Folien aus thermoplastischem Kunststoff - das Ausmaß der Durchdringung bzw. Imprägnierung der Verstärkungsfasern mit dem thermoplastischen Kunststoff zu wünschen übrig. Fernerhin resultieren häufig Lufteinschlüsse und dadurch entstehen Schwachstellen in dem hergestellten Verbundformteil bzw. Faserverbundformteil. Außerdem zeichnen sich sowohl die zur Herstellung der Halbzeuge eingesetzten Folien als auch die Halbzeuge selbst oftmals durch eine unzureichende Drapierbarkeit aus. Deshalb ist die Herstellung von dreidimensionalen bzw. mehrdimensionalen Verbundformteilen bzw. Faserverbundformteilen Einschränkungen unterworfen. Weiterhin gestaltet sich das Recycling von bekannten Faserverbundmaterialien schwierig, wenn eine thermoplastische Matrix mit anorganischen oder schwer schmelzbaren Verstärkungsfasern verstärkt ist. Zudem ist auch das Recycling von Duroplasten bei nach den bekannten Maßnahmen hergestellten Verbundformteilen bzw. Faserverbundformteilen schwierig und aufwändig.

Ein Verfahren der eingangs genannten Art ist aus EP 1 923 192 A1 bekannt. Bei diesem bekannten Verfahren ergeben sich Verbundformteile, bei denen das Ausmaß der Durchdringung bzw. Imprägnierung des Verstärkungsmaterials bzw. der Verstärkungsfasern mit dem thermoplastischen Kunststoff der niedrigerschmelzenden Fasern zu wünschen übrig lässt. In den Verbundformteilen entstehen häufig Lufteinschlüsse und dergleichen Fehlstellen und dadurch entstehen Schwachstellen in dem Verbundformteil. Insoweit ist dieses Verfahren verbesserungsbedürftig.

Demgegenüber liegt der Erfindung das technische Problem zugrunde, ein Verfahren der eingangs genannten Art anzugeben, bei dem die vorstehend beschriebenen Nachteile effektiv und funktionssicher vermieden werden können. Ferner wird ein Halbzeug für die Durchführung dieses Verfahrens sowie ein dadurch erhaltendes Verbundformteil bzw. Faserverbundformteil.

Zur Lösung dieses technischen Problems lehrt die Erfindung ein Verfahren zur Herstellung eines Verbundformteils - insbesondere eines Faserverbundformteils -, bei dem Verstärkungsmaterial, insbesondere Verstärkungsfasern, in einer Matrix aus thermoplastischem Kunststoff eingebettet ist/sind, wobei zumindest eine Lage aus höherschmelzendem Verstärkungsmaterial - insbesondere aus höherschmelzenden Verstärkungsfasern - mit zumindest einer Lage aus niedrigerschmelzenden Fasern aus thermoplastischem Kunststoff zu einem Laminat kombiniert wird und wobei das Laminat mit Wärme und/oder Druck beaufschlagt wird, so dass die niedrigerschmelzenden Fasern aus dem thermoplastischen Kunststoff schmelzen und das nicht aufgeschmolzene Verstärkungsmaterial - insbesondere die nicht aufgeschmolzenen Verstärkungsfasern - von der thermoplastischen Schmelze imprägniert wird/werden bzw. in der Matrix aus dem thermoplastischen Kunststoff eingebettet wird/werden, wobei die zumindest eine Lage aus niedrigerschmelzenden Fasern ein Vliesstoff ist, wobei als Vliesstoff ein Meltblown-Vlies eingesetzt wird, welches mit einer Meltblown-Anlage hergestellt wird, wobei die Meltblown-Anlage einen Düsenkopf aufweist, der mit einer Vielzahl von in zumindest einer Reihe angeordneten Düsenöffnungen ausgestattet ist und wobei jede einzelne Düsenöffnung mit einem separaten Blasluftstrom beaufschlagt wird.

Die Beaufschlagung des Laminates mit Wärme und/oder Druck kann dabei "Inline" oder "Offline" erfolgen. Es liegt im Rahmen der Erfindung, dass bei der Beaufschlagung mit Wärme und/oder Druck die Erwärmungstemperatur so gewählt bzw. eingestellt wird, dass lediglich die niedrigerschmelzenden Fasern schmelzen oder dass im Wesentlichen lediglich die niedrigerschmelzenden Fasern schmelzen. Es versteht sich, dass nach dem Aufbringen von Wärme und/oder Druck bzw. nach dem Formen des Verbundformteils/Faserverbundformteils ein Abkühlen der Matrix aus dem thermoplastischen Kunststoff mit dem eingebetteten Verstärkungsmaterial bzw. mit den eingebetteten Verstärkungsfasern stattfindet. - Mit dem erfindungsgemäßen Verfahren wird vorzugsweise ein Verbundformteil bzw. Faserverbundformteil in Leichtbauweise erzeugt.

Höherschmelzend meint im Rahmen der Erfindung, dass die höherschmelzende Komponente einen höheren Schmelzpunkt hat als die niedrigerschmelzende Komponente, wobei die beiden Schmelzpunkte unter gleichen äußeren Bedingungen gemessen werden. Höherschmelzendes Verstärkungsmaterial umfasst im Rahmen der Erfindung auch nichtschmelzendes Verstärkungsmaterial und dementsprechend umfasst der Begriff höherschmelzende Verstärkungsfasern im Rahmen der Erfindung auch nichtschmelzende Verstärkungsfasern. Für die Beaufschlagung mit Wärme bzw. Hitze und/oder Druck wird das Laminat zweckmäßigerweise in ein Presswerkzeug eingebracht und dort bevorzugt unter Wärmeeinwirkung und Druckeinwirkung verformt. Die Imprägnierung des Verstärkungsmaterials bzw. der Verstärkungsfasern mit der thermoplastischen Schmelze und die Einbettung des Verstärkungsmaterials bzw. der Verstärkungsfasern in die Matrix aus thermoplastischem Kunststoff soll im Rahmen der Erfindung vorzugsweise möglichst vollständig und unter Minimierung von Lufteinschlüssen erfolgen. Es empfiehlt sich, dass das Verstärkungsmaterial und insbesondere die Verstärkungsfasern als Gelege und/oder Gewebe und/oder Geflecht und/oder Gestricke und/oder Gitter oder dergleichen eingesetzt werden. Eine bevorzugte Ausführungsform ist dadurch gekennzeichnet, dass zumindest ein Gelege und/oder zumindest ein Gewebe aus Verstärkungsfasern die zumindest eine Lage aus höherschmelzenden Verstärkungsfasern bildet/bilden. - Als höherschmelzendes Verstärkungsmaterial können im Rahmen der Erfindung auch höherschmelzende Schäume oder Waben eingesetzt werden.

Eine empfohlene Ausführungsform der Erfindung zeichnet sich dadurch aus, dass die Lage aus höherschmelzendem Verstärkungsmaterial - insbesondere die Lage aus höherschmelzenden Verstärkungsfasern - zwischen zumindest zwei Lagen und insbesondere zwischen zwei Lagen aus niedrigerschmelzenden Fasern aus thermoplastischem Kunststoff zu dem Laminat angeordnet wird. Nach einer Ausführungsvariante der Erfindung liegt somit ein dreilagiges Laminat vor. Grundsätzlich sind in dem im Rahmen der Erfindung erzeugten Laminat weitere Lagen aus Verstärkungsmaterial/Verstärkungsfasern und/oder aus niedrigerschmelzenden Fasern möglich.

Erfindungsgemäß ist die zumindest eine Lage aus niedrigerschmelzenden Fasern aus thermoplastischem Kunststoff ein Vliesstoff. Es liegt im Rahmen der Erfindung, dass es sich bei dem Vliesstoff um ein Wirrvlies handelt. Zweckmäßigerweise sind in dem erfindungsgemäßen Laminat alle Lagen aus niedrigerschmelzenden Fasern aus thermoplastischem Kunststoff Vliesstoffe. Nach einer Ausführungsvariante der Erfindung handelt es sich bei einem solchen Vliesstoff um ein Spinnvlies aus Endlosfilamenten. Gemäß einer bevorzugten Ausführungsform der Erfindung ist eine Lage aus höherschmelzendem Verstärkungsmaterial - insbesondere aus höherschmelzenden Verstärkungsfasern - zwischen zwei Spinnvliesen aus Endlosfilamenten aus thermoplastischem Kunststoff angeordnet.

Erfindungsgemäß wird als Vliesstoff ein Meltblown-Vlies eingesetzt und zwar ein Biax-Meltblown-Vlies eingesetzt. Meltblown-Vliese bzw. Biax-Meltblown-Vliese haben sich im Rahmen der Erfindung besonders bewährt. Meltblown-Vliese werden mit Meltblown-Anlagen hergestellt, die einen Düsenkopf bzw. Meltblown-Blaskopf aufweisen, der mit einer Vielzahl von in zumindest einer Reihe angeordneten Düsenöffnungen ausgestattet ist. Aus diesen Düsenöffnungen wird die Kunststoffschmelze bzw. werden die schmelzflüssigen Kunststofffilamente in einen sehr schnellen Blasluftstrom extrudiert. Dadurch wird die Schmelze in feine Fasern umgewandelt, verfestigt und die Fasern werden dann auf einer Ablage - insbesondere auf einem Ablagesiebband - zum feinfaserigen Meltblown-Vlies abgelegt. Beim herkömmlichen Meltblown-Verfahren wird der Vorhang der extrudierten Kunststofffilamente von der Seite bzw. von gegenüberliegenden Seiten mit einem flächigen Blasluftstrom bzw. mit flächigen Blasluftströmen beaufschlagt. Beim Biax-Meltblown-Verfahren wird im Unterschied dazu jede einzelne Düsenöffnung bzw. jedes einzelne extrudierte Kunststofffilament mit einem separaten Blasluftstrom bzw. mit einem das Filament mantelförmig umgebenden Blasluftstrom beaufschlagt. Die mit dem Biax-Meltblown-Verfahren hergestellten Biax-Meltblown-Vliese haben sich im Rahmen der Erfindung bewährt. Die bei dem erfindungsgemäßen Verfahren eingesetzten Meltblown-Vliese bzw. Biax-Meltblown-Vliese weisen Fasern mit einem Faserdurchmesser von zweckmäßigerweise 1 bis 10 µm auf. Zur Herstellung der Meltblown-Vliese bzw. Biax-Meltblown-Vliese wird vorzugsweise ein Kunststoff mit einem Schmelzflussindex (MFI) von 75 bis 2.500 g/10 min eingesetzt. Ganz besonders bewährt hat sich ein Schmelzflussindex von 100 bis 150 g/10 min. Nach besonders empfohlener Ausführungsform des erfindungsgemäßen Verfahrens wird eine Lage aus höherschmelzendem Verstärkungsmaterial bzw. aus höherschmelzenden Verstärkungsfasern eingesetzt, die zwischen bzw. die unmittelbar zwischen zwei Meltblown-Vliesen angeordnet ist und bevorzugt zwischen zwei Biax-Meltblown-Vliesen angeordnet ist.

Gemäß einer bewährten Ausführungsform des erfindungsgemäßen Verfahrens werden niedrigerschmelzende Fasern aus zumindest einem Polyolefin, vorzugsweise aus Polypropylen und/oder Polyethylen eingesetzt. Die niedrigerschmelzenden Fasern können grundsätzlich aber auch aus anderen Thermoplasten bestehen, insbesondere auch aus einem Polyester, beispielsweise aus Polyethylenterephthalat (PET) oder aus Polyamid (PA).

Empfohlenermaßen wird für eine Lage aus höherschmelzenden Verstärkungsfasern zumindest eine Faserart aus der Gruppe "Glasfasern, Aramidfasern, Kohlenstofffasern, Metallfasern, Fasern aus thermoplastischem Kunststoff" eingesetzt. Prinzipiell kann es sich bei den höherschmelzenden Verstärkungsfasern auch um Naturfasern handeln. Die Fasern können als Kurzfasern und/oder Langfasern eingesetzt werden. Es liegt im Rahmen der Erfindung, dass die Lage aus den höherschmelzenden Verstärkungsfasern ein Gelege und/oder ein Gewebe und/oder ein Geflecht und/oder eine Gestrick ist. Besonders bewährt haben sich Gelege und Gewebe. So kann beispielsweise ein Gelege aus Glasfasern als Lage aus höherschmelzenden Verstärkungsfasern eingesetzt werden. Nach einer anderen bevorzugten Ausführungsform der Erfindung ist die Lage aus den höherschmelzenden Verstärkungsfasern ein Vliesstoff aus höherschmelzenden Verstärkungsfasern, vorzugsweise aus höherschmelzenden Kunststofffasern. So kann beispielsweise als Lage aus höherschmelzenden Verstärkungsfasern ein Vliesstoff aus PET-Fasern eingesetzt werden, wobei dieser Vliesstoff zum Beispiel zwischen zwei Meltblown-Vliesen aus Polypropylen-Fasern angeordnet ist. - Es hat sich im Übrigen bewährt, dass die Verstärkungsfasern mit einem Imprägniermittel bzw. mit einem Haftvermittler versetzt werden, um eine bessere Verbindung bzw. Haftung mit dem geschmolzenen thermoplastischen Kunststoff zu erreichen.

Eine besonders empfohlene Ausführungsform der Erfindung ist dadurch gekennzeichnet, dass das höherschmelzende Verstärkungsmaterial - insbesondere die höherschmelzenden Verstärkungsfasern - und die niedrigerschmelzenden Fasern aus dem gleichen Kunststoff bzw. aus der gleichen Kunststoffart bestehen. So können sowohl die höherschmelzenden Verstärkungsfasern als auch die niedrigerschmelzenden Fasern aus Polypropylen oder aus Polyethylen oder aus PET bestehen. Der höhere Schmelzpunkt der höherschmelzenden Verstärkungsfasern kann dadurch erreicht werden, dass die höherschmelzenden Verstärkungsfasern eine höhere Kristallinität aufweisen als die niedrigerschmelzenden Fasern. Die höherschmelzenden Verstärkungsfasern können stärker verstreckt sein als die niedrigerschmelzenden Fasern. Der höhere Schmelzpunkt der höherschmelzenden Verstärkungsfasern kann aber auch durch Zusätze, beispielsweise durch den Zusatz eines Co-Polymers mit höherem Schmelzpunkt realisiert werden. Die vorstehend beschriebene Ausführungsform der Erfindung zeichnet sich in vorteilhafter Weise durch ein problemloses Recycling aus. Das ist vor allem für Verbundformteile der Automobilindustrie sehr vorteilhaft, da hier eine hohe Recyclingquote gefordert wird.

Gemäß einer Ausführungsvariante wird die zumindest eine Lage aus Verstärkungsfasern als Rollenware mit der zumindest einen Lage aus niedrigerschmelzenden Fasern kombiniert oder aber die Verstärkungsfasern werden beispielsweise im Airlaid-Verfahren mit der zumindest einen Lage aus niedrigerschmelzenden Fasern kombiniert. Die zumindest zwei Lagen können auch kontinuierlich als Rollenware kombiniert werden oder diskontinuierlich als zweidimensionale Flächengebilde aufeinander aufgebracht werden. Es liegt im Rahmen der Erfindung, dass das erfindungsgemäß erzeugte Laminat zu einer Rolle aufgerollt werden kann und somit gleichsam als Rollenware weiterverwendet werden kann. Das wird durch die flexiblen Eigenschaften und durch die gute Drapierbarkeit des erfindungsgemäß hergestellten Laminates ermöglicht.

Nach einer bevorzugten Ausführungsform der Erfindung wird das Laminat aus der zumindest einen Lage aus höherschmelzendem Verstärkungsmaterial - insbesondere aus höherschmelzenden Verstärkungsfasern - und der zumindest einen Lage aus niedrigerschmelzenden Fasern vor der Beaufschlagung mit Wärme und/oder Druck verfestigt. Verfestigung des Laminates meint dabei insbesondere die Verbindung und/oder Verschlaufung der höherschmelzenden und niedrigerschmelzenden Komponenten. Aufgrund der bevorzugten zusätzlichen Verfestigung ist das Laminat dann besonders leicht handhabbar und zeichnet sich nach wie vor durch eine gute Drapierbarkeit aus, sodass das Laminat problemlos als Rollenware eingesetzt werden kann. Gemäß besonders empfohlener Ausführungsform des erfindungsgemäßen Verfahrens wird das Laminat mittels zumindest einer Verfestigungsart aus der Gruppe "Mechanisches Vernadeln, Wasserstrahlverfestigen, Kalandrieren, Thermobonden mit Heißluft, Verkleben, Chemisches Verbinden" verfestigt. Verkleben meint hier insbesondere Verkleben mittels Hot Melt.

Eine ganz besonders bevorzugte Ausführungsform des erfindungsgemäßen Verfahrens zeichnet sich dadurch aus, dass das Laminat bzw. das verfestigte Laminat durch Beaufschlagung mit Wärme und/oder Druck unmittelbar im Zuge eines Thermoformprozesses und/oder eines Spritzgießprozesses in ein Verbundformteil bzw. Faserverbundformteil umgewandelt wird. Im Unterschied zu dem eingangs beschriebenen aus der Praxis bekannten Verfahren wird dann also das Laminat bzw. das verfestigte Laminat unmittelbar und ohne zwischengeschalteten Aufschmelz- und Erhärtungsprozess zum Endprodukt verarbeitet. Es entfällt also die Herstellung eines Halbzeuges aus dem Verstärkungsmaterial bzw. aus den Verstärkungsfasern und einer thermoplastischen Matrix und damit wird im Vergleich zu dem bekannten Verfahren ein Verarbeitungsschritt eingespart. - Thermoformprozess meint insbesondere einen Tiefziehprozess. Bei der vorstehend beschriebenen bevorzugten Ausführungsform kann das erfindungsgemäß hergestellte Laminat bzw. verfestigte Laminat also unmittelbar tiefgezogen werden. Aufgrund der guten Handhabbarkeit und guten Drapierbarkeit des Laminates können erfindungsgemäß problemlos dreidimensionale bzw. mehrdimensionale Formteile hergestellt werden.

Nach einer anderen Ausführungsform des erfindungsgemäßen Verfahrens wird das Laminat bzw. das verfestigte Laminat in einem ersten Schritt mit Wärme und/oder Druck beaufschlagt und dabei wird ein Halbzeug mit einer Matrix aus thermoplastischem Kunststoff und darin eingebettetem Verstärkungsmaterial bzw. darin eingebetteten Verstärkungsfasern gebildet. Dieses Halbzeug aus thermoplastischer Matrix und eingebettetem Verstärkungsmaterial bzw. eingebetteten Verstärkungsfasern wird dann erst später bzw. in einem zweiten Schritt durch Beaufschlagung mit Wärme und/oder Druck im Zuge eines Thermoformprozesses und/oder eines Spritzgießprozesses in ein Verbundformteil bzw. in ein Faserverbundformteil umgewandelt. Hier wird also wie bei dem aus der Praxis bekannten Verfahren in einem zusätzlichen Schritt zunächst ein Halbzeug hergestellt, das dann später zu dem Endprodukt verarbeitet wird, beispielsweise durch Tiefziehen zu einem dreidimensionalen bzw. mehrdimensionalen Formteil. Zweckmäßigerweise wird das Halbzeug aus der thermoplastischen Matrix und dem eingebetteten Verstärkungsmaterial in Form von Platten hergestellt.

Es empfiehlt sich, dass der Schmelzpunkt des höherschmelzenden Verstärkungsmaterials bzw. der höherschmelzenden Verstärkungsfasern mindestens 20 °C, vorzugsweise mindestens 30°C und bevorzugt mindestens 50 °C höher liegt als der Schmelzpunkt der niedrigerschmelzenden Fasern aus dem thermoplastischen Kunststoff.

Der Erfindung liegt zunächst die Erkenntnis zugrunde, dass bei Verwirklichung der erfindungsgemäßen Maßnahmen eine optimale Imprägnierung bzw. Benetzung der Verstärkungsfasern mit der Schmelze aus dem thermoplastischen Kunststoff möglich ist. Lufteinschlüsse in der thermoplastischen Matrix können vermieden werden oder zumindest weitgehend vermieden werden. Bei dem erfindungsgemäßen Verfahren kann die Imprägnierung bzw. Benetzung und die Formteilformung auf einfache Weise in einem einzigen Presswerkzeug erfolgen. Im Vergleich zu dem aus der Praxis bekannten Verfahren kann bei dem erfindungsgemäßen Verfahren grundsätzlich ein Verfahrensschritt zur Herstellung eines Halbzeuges vermieden werden und die erfindungsgemäß erzeugten Laminate können unmittelbar zum Endprodukt verarbeitet werden. Das erspart Aufwand und Kosten. Es ist auch hervorzuheben, dass sich die erfindungsgemäß erzeugten Laminate durch eine exzellente Handhabbarkeit und insbesondere Drapierbarkeit auszeichnen. Sie können problemlos als flexible Rollenware eingesetzt werden und dreidimensionale bzw. mehrdimensionale Formteile sind auf einfache Weise herstellbar. Die erfindungsgemäß erzeugten Verbundformteile bzw. Faserverbundformteile zeichnen sich auch durch hervorragende mechanische Eigenschaften aus. Weiterhin ist darauf hinzuweisen, dass insbesondere bei entsprechender Materialwahl die erfindungsgemäß hergestellten Verbundformteile bzw. Faserverbundformteile auf einfache und wenig aufwändige Weise recycelt werden können. Insgesamt zeichnet sich das erfindungsgemäße Verfahren durch geringe Kosten und geringen Aufwand aus.

Im Folgenden wird die Erfindung anhand einer lediglich ein Ausführungsbeispiel darstellenden Zeichnung näher erläutert. Es zeigen in schematischer Darstellung:
- Fig. 1: eine Vorrichtung zur Durchführung des erfindungsgemäßen Verfahrens,
- Fig. 2: einen Schnitt durch ein erfindungsgemäß hergestelltes Faserverbundformteil und
- Fig. 3: ein erfindungsgemäß hergestelltes Faserverbundformteil in perspektivischer Ansicht.

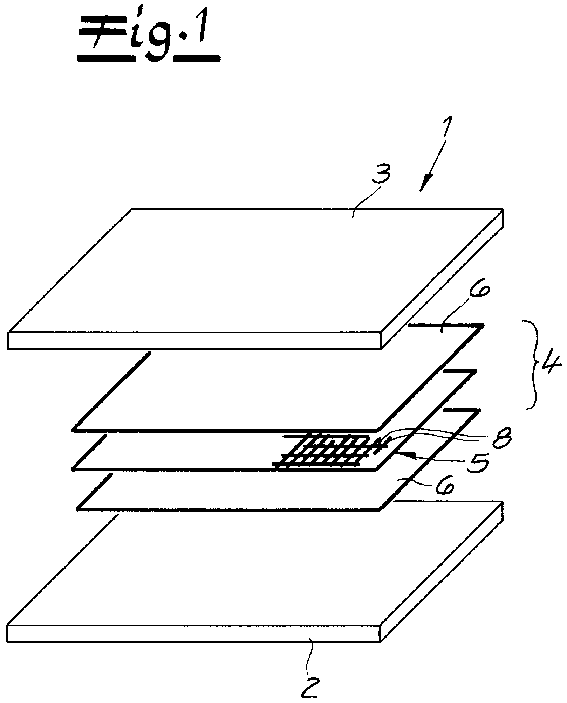

Die Fig. 1 zeigt sehr schematisch ein Presswerkzeug 1 mit zwei Pressplatten 2, 3. Zwischen den Pressplatten 2, 3 wird im Ausführungsbeispiel ein dreilagiges Laminat 4 angeordnet. Dieses Laminat 4 weist eine mittige Lage aus höherschmelzenden Verstärkungsfasern in Form eines Glasfasergewebes 5 auf.

Dieses Glasfasergewebe 5 ist zwischen zwei Biax-Meltblown-Vliesen 6 aus Polypropylenfasern angeordnet. Beim Zusammenpressen der Pressplatten 2, 3 wird das Laminat mit Wärme und Druck beaufschlagt, so dass die niedrigerschmelzenden Polypropylenfasern aufschmelzen. Die Erwärmungstemperatur wird so gewählt, dass lediglich die Polypropylenfasern schmelzen und die Glasfasern 8 des Glasfasergewebes 5 dagegen nicht aufgeschmolzen werden. Vielmehr werden die Glasfasern 8 von der thermoplastischen Polypropylenschmelze imprägniert bzw. benetzt und auf diese Weise werden die Glasfasern 8 in einer Matrix aus thermoplastischem Kunststoff (PP) eingebettet. Auf die vorstehend beschriebene Weise kann nach bevorzugter Ausführungsform der Erfindung unmittelbar ein Faserverbundformteil 7 hergestellt werden. Die Fig. 1 zeigt nur sehr schematisch ein einfaches Presswerkzeug 1. Grundsätzlich können im Rahmen der Erfindung mit speziellen Presswerkzeugen auf einfache Weise dreidimensionale bzw. mehrdimensionale Formteile mit komplizierten Strukturen hergestellt werden. Dazu trägt die flexible Handhabbarkeit und die gute Drapierbarkeit der Laminate 4 bei.

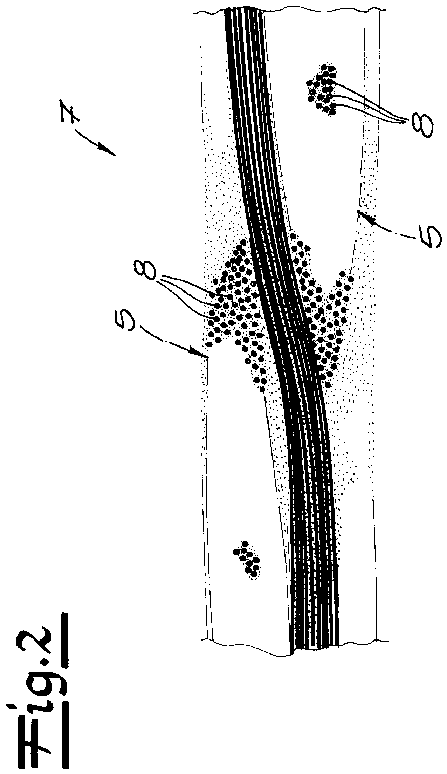

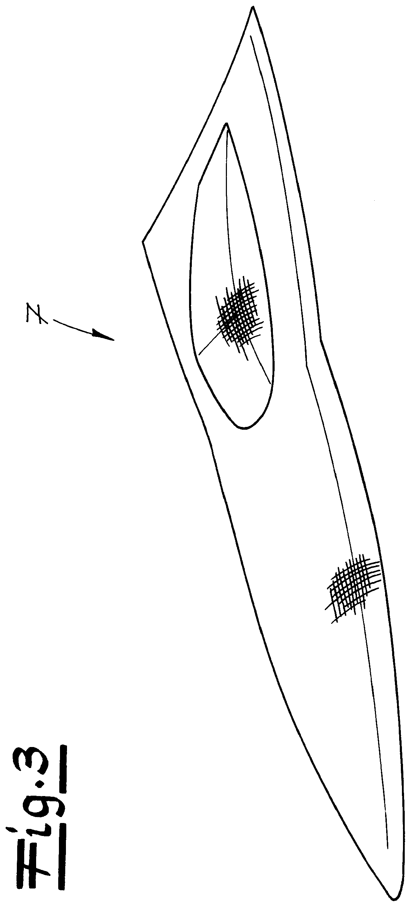

Die Fig. 2 zeigt einen Schnitt durch ein mit dem erfindungsgemäßen Verfahren hergestelltes Faserverbundformteil 7 nach der Abkühlung. Es ist erkennbar, dass die Glasfasern 8 des Glasfasergewebes 5 vollständig in die thermoplastische Polypropylen-Matrix eingebettet sind. Störende Lufteinschlüsse sind nicht zu beobachten und sie können bei Realisierung der erfindungsgemäßen Maßnahmen auf einfache Weise vermieden werden. Die auf diese Weise erfindungsgemäß hergestellten Faserverbundformteile 7 weisen optimale mechanische Eigenschaften auf. - In der Fig. 3 ist im Übrigen ein weiteres erfindungsgemäß hergestelltes Faserverbundformteil 7 mit mehrdimensionaler Struktur dargestellt. Mehrdimensionale Strukturen lassen sich im Rahmen des erfindungsgemäßen Verfahrens einfach und problemlos verwirklichen.

Rahmen der Erfindung mit speziellen Presswerkzeugen auf einfache Weise dreidimensionale bzw. mehrdimensionale Formteile mit komplizierten Strukturen hergestellt werden. Dazu trägt die flexible Handhabbarkeit und die gute Drapierbarkeit der Laminate 4 bei.

Die Fig. 2 zeigt einen Schnitt durch ein mit dem erfindungsgemäßen Verfahren hergestelltes Faserverbundformteil 7 nach der Abkühlung. Es ist erkennbar, dass die Glasfasern 8 des Glasfasergewebes 5 vollständig in die thermoplastische Polypropylen-Matrix eingebettet sind. Störende Lufteinschlüsse sind nicht zu beobachten und sie können bei Realisierung der erfindungsgemäßen Maßnahmen auf einfache Weise vermieden werden. Die auf diese Weise erfindungsgemäß hergestellten Faserverbundformteile 7 weisen optimale mechanische Eigenschaften auf. - In der Fig. 3 ist im Übrigen ein weiteres erfindungsgemäß hergestelltes Faserverbundformteil 7 mit mehrdimensionaler Struktur dargestellt. Mehrdimensionale Strukturen lassen sich im Rahmen des erfindungsgemäßen Verfahrens einfach und problemlos verwirklichen.

## Patentansprüche

1. Verfahren zur Herstellung eines Verbundformteils, insbesondere eines Faserverbundformteils (7), bei dem Verstärkungsmaterial, insbesondere Verstärkungsfasern in einer Matrix aus thermoplastischem Kunststoff eingebettet ist/sind, wobei zumindest eine Lage aus höherschmelzendem Verstärkungsmaterial - insbesondere aus höherschmelzenden Verstärkungsfasern - mit zumindest einer Lage aus niedrigerschmelzenden Fasern aus thermoplastischem Kunststoff zu einem Laminat (4) kombiniert wird und wobei das Laminat (4) mit Wärme und/oder Druck beaufschlagt wird, sodass die niedrigerschmelzenden Fasern schmelzen und das Verstärkungsmaterial - insbesondere die Verstärkungsfasern - von der Schmelze imprägniert wird/werden bzw. in der Matrix (9) aus thermoplastischem Kunststoff eingebettet wird/werden, wobei die zumindest eine Lage aus niedrigerschmelzenden Fasern ein Vliesstoff ist, wobei als Vliesstoff ein Meltblown-Vlies (6) eingesetzt wird, welches mit einer Meltblown-Anlage hergestellt wird, wobei die Meltblown-Anlage einen Düsenkopf aufweist, der mit einer Vielzahl von in zumindest einer Reihe angeordneten Düsenöffnungen ausgestattet ist,
**dadurch gekennzeichnet, dass**
jede einzelne Düsenöffnung mit einem separaten Blasluftstrom beaufschlagt wird.

2. Verfahren nach Anspruch 1, wobei die Lage aus höherschmelzendem Verstärkungsmaterial - insbesondere aus höherschmelzenden Verstärkungsfasern - zwischen zwei Lagen aus niedrigerschmelzenden Fasern aus thermoplastischem Kunststoff zu dem Laminat (4) angeordnet wird.

3. Verfahren nach einem der Ansprüche 1 oder 2, wobei niedrigerschmelzende Fasern aus zumindest einem Polyolefin, vorzugweise aus Polypropylen und/ oder Polyethylen oder aus zumindest einem thermoplastischen Elastomeren oder aus zumindest einem Polykondensat eingesetzt werden.

4. Verfahren nach einem der Ansprüche 1 bis 3, wobei für die Lage aus höherschmelzenden Verstärkungsfasern zumindest eine Faserart aus der Gruppe "Glasfasern (8), Aramidfasern, Kohlenstofffasern, Metallfasern, Fasern aus thermoplastischem Kunststoff" eingesetzt wird.

5. Verfahren nach einem der Ansprüche 1 bis 4, wobei das höherschmelzende Verstärkungsmaterial - insbesondere die höherschmelzenden Verstärkungsfasern - und die niedrigerschmelzenden Fasern aus dem gleichen Kunststoff bzw. aus der gleichen Kunststoffart bestehen.

6. Verfahren nach einem der Ansprüche 1 bis 5, wobei das Laminat (4) aus der zumindest einen Lage aus höherschmelzendem Verstärkungsmaterial - insbesondere aus höherschmelzenden Verstärkungsfasern - und der zumindest einen Lage aus niedrigerschmelzenden Fasern vor der Beaufschlagung mit Wärme und/oder Druck verfestigt wird.

7. Verfahren nach Anspruch 6, wobei das Laminat mittels zumindest einer Verfestigungsart aus der Gruppe "Mechanisches Vernadeln, Wasserstrahlverfestigen, Kalandrieren, Thermobonden mit Heißluft, Verkleben, Chemisches Verbinden" verfestigt wird.

8. Verfahren nach einem der Ansprüche 1 bis 7, wobei das Laminat (4) bzw. das verfestigte Laminat (4) durch Beaufschlagung mit Wärme und/oder Druck unmittelbar im Zuge eines Thermoformprozesses und/oder eines Spritzgießprozesses in ein Verbundformteil bzw. Faserverbundformteil (7) umgewandelt wird.

9. Verfahren nach einem der Ansprüche 1 bis 7, wobei das Laminat (4) bzw. das verfestigte Laminat (4) in einem ersten Schritt mit Wärme und/oder Druck beaufschlagt wird und dabei ein Halbzeug mit einer Matrix aus thermoplastischem Kunststoff und darin eingebettetem Verstärkungsmaterial bzw. darin eingebetteten Verstärkungsfasern gebildet wird und wobei das Halbzeug in einem zweiten Schritt durch Beaufschlagung mit Wärme und/oder Druck im Zuge eines Thermoformprozesses und/oder eines Spritzgießprozesses in ein Verbundformteil bzw. Faserverbundformteil (7) umgewandelt wird.

10. Verfahren nach einem der Ansprüche 1 bis 9, wobei der Schmelzpunkt des höherschmelzenden Verstärkungsmaterials bzw. der höherschmelzenden Verstärkungsfasern mindestens 20 °C, vorzugsweise mindestens 30 °C und bevorzugt mindestens 50 °C höher liegt als der Schmelzpunkt der niedrigerschmelzenden Fasern.

## Claims

1. A method for producing a composite moulded part, in particular a fibre composite moulded part (7), in which reinforcing material, in particular reinforcing fibres is/are embedded in a matrix of thermoplastic material, wherein at least one layer of higher-melting reinforcing material - in particular of higher-melting reinforcing fibres - is combined with at least one layer of lower-melting fibres of thermoplastic material to form a laminate (4) and wherein the laminate (4) is exposed to heat and/or pressure so that the lower-melting fibres melt and the reinforcing material - in particular the reinforcing fibres - is/are impregnated by the melt or is/are embedded in the matrix (9) of thermoplastic material, wherein the at least one layer of lower-melting fibres is a nonwoven fabric, wherein a meltblown nonwoven (6) is used as nonwoven material which is produced using a meltblown system, wherein the meltblown system comprises a nozzle head which is provided with a plurality of nozzle openings arranged in at least one row,
**characterized in that**
each individual nozzle opening is exposed to a separate blown air stream.

2. The method according to claim 1, wherein the layer of higher-melting reinforcing material - in particular of higher-melting reinforcing fibres - is arranged between two layers of lower-melting fibres of thermoplastic material to form the laminate (4).

3. The method according to any one of claims 1 or 2, wherein lower-melting fibres of at least one polyolefin, preferably of polypropylene and/or polyethylene or of at least one thermoplastic elastomer or of at least one polycondensate are used.

4. The method according to any one of claims 1 to 3, wherein at least one type of fibre from the group "glass fibres (8), aramid fibres, carbon fibres, metal fibres, fibres of thermoplastic material" is used for the layer of higher-melting reinforcing fibres.

5. The method according to any one of claims 1 to 4, wherein the higher-melting reinforcing material - in particular of higher-melting reinforcing fibres - and the lower-melting fibres consist of the same plastic or of the same type of plastic.

6. The method according to any one of claims 1 to 5, wherein the laminate (4) comprising at least one layer of higher-melting reinforcing material - in particular of higher-melting reinforcing fibres - and the at least one layer of lower-melting fibres is consolidated before exposure to heat and/or pressure.

7. The method according to claim 6, wherein the laminate is consolidated by means of at least one type of consolidation from the group "mechanical needling, water-jet consolidation, calendering, hot-air thermobonding, adhesion, chemical connection".

8. The method according to any one of claims 1 to 7, wherein the laminate (4) or the consolidated laminate (4) is converted into a composite moulded part or fibre composite moulded part (7) by exposure to heat and/or pressure directly in the course of a thermoforming process and/or an injection moulding process.

9. The method according to any one of claims 1 to 7, wherein in a first step the laminate (4) or the consolidated laminate (4) is exposed to heat and/or pressure and a semifinished product with a matrix of thermoplastic material and reinforcing material embedded therein or reinforcing fibres embedded therein is formed and wherein in a second step the semifinished product is converted into a composite moulded part or fibre composite moulded part (7) by exposure to heat and/or pressure in the course of a thermoforming process and/or injection moulding process.

10. The method according to any one of claims 1 to 9, wherein the melting point of the higher-melting reinforcing material or the higher-melting reinforcing fibres is at least 20°C, preferably at least 30°C and preferably at least 50°C higher than the melting point of the lower-melting fibres.

## Revendications

1. Procédé destiné à fabriquer une pièce moulée composite, notamment une pièce moulée composite (7) renforcée par fibres, lors duquel une matière de renfort, notamment des fibres de renfort est/sont incorporée(s) dans une matrice en matière thermoplastique, au moins une couche de matière de renfort à point de fusion plus élevé (notamment des fibres de renfort à point de fusion plus élevé) étant associée(s) avec au moins une couche de fibres de matière thermoplastique à point de fusion moins élevé en un laminé (4) et le laminé (4) étant soumis à une chaleur et/ou à une pression, de sorte à faire fondre les fibres à point de fusion moins élevé et à ce que la matière de renfort (notamment les fibres de renfort) soi (en) t imprégnée(s) de la masse fondue ou s'incorpore(nt) dans la matrice (9) en matière thermoplastique, l'au moins une couche de fibres à point de fusion moins élevé étant un non-tissé, en tant que non-tissé étant mis en oeuvre un non tissé (6) obtenu par extrusion-soufflage, que l'on fabrique à l'aide d'une installation d'extrusion-soufflage, l'installation d'extrusion-soufflage comportant une tête de buse qui est équipée d'une pluralité d'orifices de buse placés en au moins une rangée,
**caractérisé en ce**
**qu'**on soumet chaque orifice de buse individuel à un flux d'air soufflé séparé.

2. Procédé selon la revendication 1, la couche en matière de renfort à point de fusion plus élevé (notamment en fibres de renfort à point de fusion plus élevé) étant placée entre deux couches de fibres en matière thermoplastique à point de fusion moins élevé pour former le laminé (4).

3. Procédé selon l'une quelconque des revendications 1 ou 2, des fibres à point de fusion moins élevé en au moins une polyoléfine, de préférence en polypropylène et/ ou en polyéthylène ou en au moins un élastomère thermoplastique ou en au moins un polycondensat étant mises en oeuvre.

4. Procédé selon l'une quelconque des revendications 1 à 3, pour la couche de fibres à point de fusion moins élevé étant mis en oeuvre au moins un type de fibres du groupe comprenant « les fibres de verre (8), les fibres d'aramide, les fibres de carbone, les fibres métalliques, les fibres en matière thermoplastique ».

5. Procédé selon l'une quelconque des revendications 1 à 4, la matière de renfort à point de fusion plus élevé (notamment les fibres de renfort à point de fusion plus élevé) et les fibres à point de fusion moins élevé étant constituées de la même matière plastique ou du même type de matière plastique.

6. Procédé selon l'une quelconque des revendications 1 à 5, le laminé (4) constitué de l'au moins une couche de matière de renfort à point de fusion plus élevé (notamment des fibres de renfort à point de fusion plus élevé) et de l'au moins une couche de fibres à point de fusion moins élevé étant consolidé avant d'être soumis à une chaleur et/ou une pression.

7. Procédé selon la revendication 6, le laminé étant consolidé à l'aide d'au moins l'un des types de consolidation du groupe comprenant « l'aiguilletage mécanique, la consolidation par jet d'eau, le calandrage, le thermobondage à l'air chaud, le collage, l'assemblage chimique ».

8. Procédé selon l'une quelconque des revendications 1 à 7, le laminé (4) ou le laminé (4) consolidé étant transformé en une pièce moulée composite ou en une pièce moulée composite (7) renforcée par fibres en étant soumis à une chaleur et/ou à une pression directement au cours d'un processus de thermoformage et/ou de moulage par injection.

9. Procédé selon l'une quelconque des revendications 1 à 7, le laminé (4) ou le laminé (4) consolidé étant soumis dans une première étape à une chaleur et/ou à une pression et à cet effet étant créé un produit semi-fini avec une matrice en matière thermoplastique et une matière de renfort incorporée dans cette dernière ou des fibres de renfort incorporées dans cette dernière et dans une deuxième étape, le produit semi-fini étant transformé en une pièce moulée composite ou en une pièce moulée composite (7) renforcée par fibres en étant soumis à une chaleur et/ou à une pression au cours d'un processus de thermoformage et/ou d'un processus de moulage par injection.

10. Procédé selon l'une quelconque des revendications 1 à 9, le point de fusion de la matière de renfort à point de fusion plus élevé ou des fibres de renfort à point de fusion plus élevé étant supérieur d'au moins 20 °C, de préférence d'au moins 30 °C et de manière préférée d'au moins 50 °C au point de fusion des fibres à point de fusion moins élevé.
